# FASCICULE DE BREVET EUROPEEN

(11) **EP 3 825 164 B1**
(45) Date de publication et mention de la délivrance du brevet: **18.05.2022**
(21) Numéro de dépôt: 20203329.6
(22) Date de dépôt: 22.10.2020
(51) Int. Cl.: B60L 53/22, B60L 53/14

(54) **RECHARGE DE BATTERIES**
WIEDERAUFLADUNG VON BATTERIEN
BATTERY CHARGER

(30) Priorité: 21.11.2019 FR 1912993
(43) Date de publication de la demande: 26.05.2021
(73) Titulaire: Commissariat à l'Energie Atomique et aux Energies Alternatives, 75015 Paris (FR)
(72) Inventeur: DAUCHY, Julien, 38054 GRENOBLE CEDEX 9 (FR); CERVANTES, Valéry, 38054 GRENOBLE CEDEX 9 (FR); CHATROUX, Daniel, 38054 GRENOBLE CEDEX 9 (FR); GARNIER, Laurent, 38054 GRENOBLE CEDEX 9 (FR)
(74) Mandataire: Cabinet Beaumont

(56) Documents cités:
- EP-A1- 3 078 536
- WO-A1-2021/042409
- WO-A2-2015/016966
- US-A1- 2018 361 865
- US-A1- 2019 210 475

## Description

### Domaine technique

La présente description concerne de façon générale les procédés, systèmes et dispositifs de recharge de batteries et, plus particulièrement, les véhicules électriques susceptibles de mettre en œuvre de tels procédés et systèmes ou d'embarquer de tels dispositifs.

### Technique antérieure

Des infrastructures dites d'auto-partage permettent actuellement à un utilisateur de louer un véhicule, par exemple une voiture électrique, depuis une première station, de quitter cette première station pour parcourir un trajet avec ce véhicule, puis de restituer le véhicule dans une deuxième station. Cette deuxième station peut, selon les besoins de l'utilisateur, être différente de la première station. Le plus souvent, des véhicules sont transportés d'une station à une autre en utilisant la charge résiduelle de leurs batteries. Des solutions de chargement de véhicules électriques peuvent être trouvées dans le document US 2018/361865.

### Résumé de l'invention

Il existe un besoin d'améliorer les systèmes de gestion de flotte ou parc de véhicules existants.

Il existe un besoin d'améliorer les dispositifs de recharge de batteries existants.

Un mode de réalisation pallie tout ou partie des inconvénients des procédés, systèmes de gestion de flotte ou parc de véhicules et dispositifs de recharge de batteries connus.

Un mode de réalisation prévoit un procédé de recharge de batteries, dans lequel :
un premier convertisseur d'énergie est utilisé pour recharger une première batterie ; et
le premier convertisseur d'énergie est mis en court-circuit pour recharger, depuis la première batterie, une ou plusieurs deuxièmes batteries,
la première batterie étant destinée à être embarquée sur un premier véhicule et chaque deuxième batterie étant destinée à être embarquée sur un deuxième véhicule.

Selon un mode de réalisation, chaque deuxième batterie est rechargée par un deuxième convertisseur d'énergie qui lui est associé.

Selon un mode de réalisation, la première batterie est apte à être rechargée depuis une borne de recharge.

Selon un mode de réalisation, la première batterie est apte à être rechargée à partir d'une tension alternative, fournie à la borne de recharge par un réseau de distribution électrique.

Selon un mode de réalisation, la première batterie est apte à être rechargée à partir d'une tension continue, fournie par une troisième batterie intégrée à la borne de recharge.

Selon un mode de réalisation, la première batterie est apte à être rechargée à partir d'une tension continue, fournie par l'une des deuxièmes batteries.

Un mode de réalisation prévoit un système de recharge de batteries mettant en œuvre le procédé tel que décrit.

Selon un mode de réalisation :
un premier dispositif, comprenant le premier convertisseur d'énergie, et la première batterie sont embarqués sur un premier véhicule ; et
des deuxièmes dispositifs, comprenant chacun l'un des deuxièmes convertisseurs d'énergie, et l'une des deuxièmes batteries correspondantes sont embarqués sur des deuxièmes véhicules.

Selon un mode de réalisation, le premier et les deuxièmes convertisseurs d'énergie comportent chacun un étage redresseur.

Selon un mode de réalisation, le premier et les deuxièmes convertisseurs d'énergie comportent chacun un étage abaisseur.

Selon un mode de réalisation, un bus de puissance interconnecte le premier et les deuxièmes véhicules.

Selon un mode de réalisation :
un premier contacteur relie chaque première batterie et chaque deuxième batterie au bus de puissance ; et
un deuxième contacteur relie chaque premier convertisseur et chaque deuxième convertisseur d'énergie au bus de puissance.

Selon un mode de réalisation, le premier contacteur et le deuxième contacteur d'un même véhicule sont interverrouillés.

Selon un mode de réalisation, les premiers contacteurs du premier véhicule et des deuxièmes véhicules sont interverrouillés.

Selon un mode de réalisation, un bus de données interconnecte le premier et les deuxièmes véhicules.

Un mode de réalisation prévoit un dispositif de recharge d'une batterie d'un système tel que décrit.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
la figure 1 représente, de façon schématique, un mode de réalisation d'un système de recharge de batteries ;
la figure 2 est un schéma électrique d'un exemple de convertisseur d'énergie du type auquel s'appliquent des modes de réalisation décrits ;
la figure 3 représente, de façon schématique, un mode de mise en œuvre du système de recharge de batteries de la figure 1 ;
la figure 4 représente, de façon schématique, un autre mode de mise en œuvre du système de recharge de batteries de la figure 1 ; et
la figure 5 représente, de façon schématique, encore un autre mode de mise en œuvre du système de recharge de batteries de la figure 1.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, l'implantation physique des systèmes et dispositifs dans des véhicules électriques n'a pas été décrite, ces systèmes et dispositifs pouvant aisément être implantés dans des véhicules électriques usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

En supposant, dans une infrastructure d'auto-partage, que plusieurs véhicules quittent une première station, mais qu'aucun autre véhicule n'y est restitué entre-temps, cette première station va peu à peu se vider de ses véhicules, au risque de finir par ne plus en contenir aucun. Un utilisateur se présentant alors à la première station peut donc se retrouver dans l'impossibilité d'y louer un véhicule, notamment dans une situation de forte affluence où de nombreux véhicules quittent cette première station pendant une courte durée.

À l'opposé, si plusieurs véhicules sont restitués à la première station, mais qu'aucun véhicule ne la quitte entre-temps, cette première station va peu à peu se remplir de véhicules, au risque de finir par être saturée de véhicules. Un autre utilisateur se présentant alors à la première station peut donc se retrouver dans l'impossibilité d'y restituer son véhicule, notamment dans une autre situation de forte affluence où de nombreux véhicules sont restitués dans cette première station pendant une courte durée.

Les systèmes d'auto-partage actuels font donc face à un problème de gestion de flotte ou parc de véhicules dans les différentes stations, pour garantir aux utilisateurs que chaque station contient et peut accueillir un nombre de véhicules adéquat. Une façon de résoudre ce problème consiste à redistribuer des véhicules entre les différentes stations, autrement dit à déplacer ces véhicules d'une station à une autre.

Afin de gagner en efficacité lors de ces déplacements, des véhicules électriques embarquant une batterie peuvent notamment être accouplés entre eux mécaniquement et électriquement à la manière d'un train, offrant ainsi la possibilité à un seul opérateur de redistribuer simultanément plusieurs véhicules. Lorsqu'ils sont en station, en attente d'être loués par des utilisateurs, ces véhicules électriques peuvent également être accouplés de la sorte afin que leurs batteries respectives puissent être rechargées depuis une borne.

L'accouplement électrique ou l'interconnexion de plusieurs batteries, par exemple en vue de leur recharge, présente cependant plusieurs difficultés, notamment en raison d'une possible différence de tension entre ces batteries. Les batteries présentant souvent une faible résistance interne, cette différence de tension est susceptible d'engendrer des courants atteignant typiquement plusieurs milliers d'ampères, risquant ainsi de provoquer des effets particulièrement destructeurs pour ces batteries. Des procédés, systèmes et dispositifs de recharge de batteries complexes sont actuellement mis en œuvre pour tenter de résoudre ces difficultés.

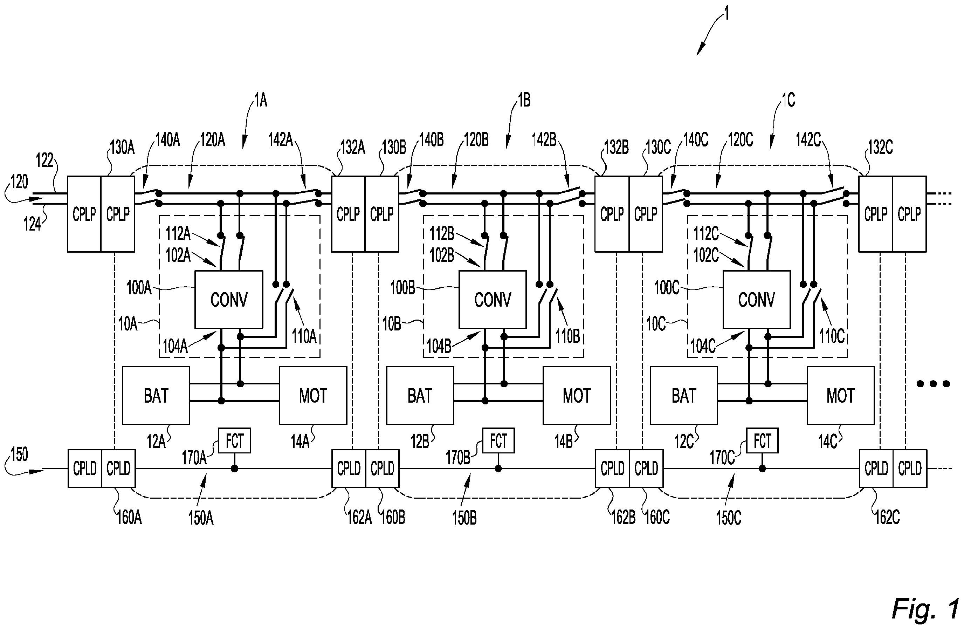

La figure 1 représente, de façon schématique, un mode de réalisation d'un système 1 de recharge de batteries, appliqué à des véhicules électriques 1A, 1B et 1C accouplés à la manière d'un train.

Les véhicules électriques 1A, 1B et 1C sont, par exemple, des voitures électriques, des bateaux électriques, des vélos électriques, etc. Pour simplifier, seuls trois véhicules électriques 1A, 1B et 1C ont été symbolisés en figure 1. Il est toutefois entendu que le système 1 peut notamment être appliqué à davantage de véhicules électriques, l'adaptation des modes de réalisation et modes de mise en œuvre décrits à un nombre quelconque de véhicules électriques étant à la portée de l'homme du métier à partir des indications ci-dessous.

Dans la suite de la description, des éléments associés au véhicule 1A seront repérés par le suffixe « A ». De façon analogue, des éléments associés au véhicule 1B, respectivement 1C, seront repérés par le suffixe « B », respectivement « C ».

En figure 1, chaque véhicule 1A, 1B, 1C comporte respectivement un dispositif 10A, 10B, 10C de recharge de batteries. Chaque dispositif 10A, 10B, 10C de recharge de batteries est notamment destiné à recharger une batterie 12A, 12B, 12C (BAT) qui lui est associée. Les batteries 12A, 12B et 12C sont respectivement embarquées sur les véhicules 1A, 1B et 1C. Chaque batterie 12A, 12B et 12C est notamment destinée à alimenter en énergie électrique un moteur 14A, 14B, 14C (MOT) qui lui est associé. Les moteurs 14A, 14B et 14C peuvent produire un déplacement des véhicules respectifs 1A, 1B ou 1C auxquels ils appartiennent dans le cas, par exemple, d'une voiture électrique. Ces moteurs 14A, 14B et 14C peuvent alternativement participer à la propulsion des véhicules 1A, 1B ou 1C auxquels ils appartiennent respectivement dans le cas, par exemple, d'un vélo électrique. Les batteries 12A, 12B et 12C peuvent aussi alimenter d'autres systèmes (non représentés), par exemple des accessoires utiles au fonctionnement des véhicules 1A, 1B et 1C, respectivement.

Chaque dispositif 10A, 10B, 10C de recharge de batteries comprend respectivement, comme illustré en figure 1 :
un convertisseur d'énergie 100A, 100B, 100C (CONV), par exemple un chargeur de batteries ;
un premier contacteur 110A, 110B, 110C, monté ou câblé en parallèle du convertisseur d'énergie 100A, 100B, 100C ; et
un deuxième contacteur 112A, 112B, 112C, monté ou câblé en série avec le convertisseur d'énergie 100A, 100B, 100C.

Une entrée 102A, 102B, 102C du convertisseur d'énergie 100A, 100B, 100C est reliée, de préférence connectée, au deuxième contacteur 112A, 112B, 112C. Une sortie 104A, 104B, 104C de ce convertisseur d'énergie 100A, 100B, 100C est reliée, de préférence connectée, au premier contacteur 110A, 110B, 110C et à la batterie 12A, 12B, 12C du véhicule électrique 1A, 1B, 1C.

Le premier contacteur 110A, 110B, 110C et le deuxième contacteur 112A, 112B, 112C sont tous deux reliés, de préférence connectés, à une portion 120A, 120B, 120C d'un bus de puissance 120 reliant les différents véhicules entre eux de telle sorte que :
le premier contacteur 110A, 110B, 110C est intercalé entre la portion 120A, 120B, 120C du bus de puissance 120 et la sortie 104A, 104B, 104C du convertisseur 100A, 100B, 100C ; et
le deuxième contacteur 112A, 112B, 112C est intercalé entre la portion 120A, 120B, 120C du bus de puissance 120 et l'entrée 102A, 102B, 102C du convertisseur 100A, 100B, 100C.

Selon ce mode de réalisation, les véhicules 1A, 1B et 1C embarquent une distribution de puissance à deux fils ou conducteurs. En particulier, le bus de puissance 120 comporte deux conducteurs 122 et 124. Ces deux conducteurs 122 et 124 du bus de puissance 120 sont susceptibles de véhiculer :
un courant électrique alternatif, par exemple un courant issu d'une source imposant une tension alternative sinusoïdale monophasée (non représentée), l'un des deux conducteurs 122, 124 faisant alors office de conducteur de phase et l'autre conducteur faisant office de conducteur de neutre ; ou
un courant électrique continu, par exemple un courant issu d'une source de tension continue (non représentée), l'un des deux conducteurs 122, 124 étant alors porté à un potentiel d'alimentation sensiblement constant et l'autre conducteur étant laissé flottant, c'est-à-dire qu'aucun potentiel n'est appliqué sur cet autre conducteur. En variante, l'un des deux conducteurs 122, 124 est porté au potentiel d'alimentation sensiblement constant et l'autre conducteur est porté à un potentiel de référence, par exemple la masse.

Selon un autre mode de réalisation, la distribution de puissance du système 1, donc le bus de puissance 120, peut comporter un nombre de conducteurs supérieur à deux, par exemple trois conducteurs ou quatre conducteurs, permettant, par exemple, de véhiculer des signaux de puissance triphasés. Le cas échéant, le nombre de conducteurs est notamment déterminé en fonction d'un schéma de liaison à la terre (ou régime de neutre) retenu pour la distribution électrique du train de véhicules du système 1. Le bus de puissance peut également comprendre un conducteur de protection (non représenté en figure 1).

En figure 1, chaque portion 120A, 120B, 120C du bus de puissance 120 comporte, à une première extrémité, un premier dispositif 130A, 130B, 130C (CPLP) de couplage. De façon analogue, chaque portion 120A, 120B, 120C du bus de puissance 120 comporte, à une deuxième extrémité, un deuxième dispositif 132A, 132B, 132C (CPLP) de couplage. Le premier dispositif 130A, 130B, 130C de couplage et le deuxième dispositif 132A, 132B, 132C de couplage du véhicule 1A, 1B, 1C sont notamment adaptés à accoupler électriquement ce véhicule 1A, 1B, 1C avec un ou deux autres véhicules. Ces premiers dispositifs 130A, 130B et 130C de couplage et ces deuxièmes dispositifs 132A, 132B et 132C de couplage participent notamment à la continuité électrique du bus de puissance 120.

Dans le train de véhicules 1A, 1B et 1C illustré en figure 1, où le véhicule 1B est intercalé entre les véhicules 1A et 1C, ce véhicule 1B est accouplé électriquement :
au véhicule 1A, par l'intermédiaire du premier dispositif 130B de couplage du véhicule 1B et du deuxième dispositif 132A de couplage du véhicule 1A ; et
au véhicule 1C, par l'intermédiaire du deuxième dispositif 132B de couplage du véhicule 1B et du premier dispositif 130C de couplage du véhicule 1C.

Les premiers dispositifs 130A, 130B et 130C de couplage et les deuxièmes dispositifs 132A, 132B et 132C de couplage peuvent être partiellement ou totalement embarqués sur les véhicules 1A, 1B et 1C, ou être indépendants de ces véhicules 1A, 1B et 1C. Le premier dispositif 130A, 130B, 130C de couplage peut, en pratique, être différent du deuxième dispositif 132A, 132B, 132C de couplage. Ces premiers dispositifs 130A, 130B et 130C de couplage et ces deuxièmes dispositifs 132A, 132B et 132C de couplage peuvent, par exemple, former conjointement des connecteurs électriques comportant une fiche s'insérant dans une prise ou une embase.

Le dispositif 10A, 10B, 10C de recharge de batteries est relié, de préférence connecté, à la portion 120A, 120B, 120C du bus de puissance 120 entre un troisième contacteur 140A, 140B, 140C et un quatrième contacteur 142A, 142B, 142C. Ce troisième contacteur 140A, 140B, 140C et ce quatrième contacteur 142A, 142B, 142C sont tous deux intercalés entre le premier dispositif 130A, 130B, 130C de couplage et le deuxième dispositif 132A, 132B, 132C de couplage du véhicule 1A, 1B, 1C associé.

Le troisième contacteur 140A, 140B, 140C permet, selon son état ouvert ou fermé, respectivement d'isoler électriquement le dispositif 10A, 10B, 10C de recharge de batteries par rapport au premier dispositif de couplage 130A, 130B, 130C ou de relier électriquement ce dispositif 10A, 10B, 10C de recharge de batteries à ce premier dispositif de couplage 130A, 130B, 130C. De façon analogue, le quatrième contacteur 142A, 142B, 142C permet, selon son état ouvert ou fermé, respectivement d'isoler électriquement le dispositif 10A, 10B, 10C de recharge de batteries par rapport au deuxième dispositif de couplage 132A, 132B, 132C ou de relier électriquement le dispositif 10A, 10B, 10C de recharge de batteries au dispositif de couplage 132A, 132B, 132C.

Les troisièmes contacteurs 140A, 140B et 140C et les quatrièmes contacteurs 142A, 142B et 142C permettent, à l'état fermé, d'établir une continuité du bus de puissance 120. Ces troisièmes contacteurs 140A, 140B et 140C et ces quatrièmes contacteurs 142A, 142B et 142C permettent en particulier, à l'état fermé, d'interconnecter les portions 120A, 120B, 120C du bus de puissance 120.

À l'inverse, les troisièmes contacteurs 140A, 140B et 140C et les quatrièmes contacteurs 142A, 142B et 142C permettent, à l'état ouvert, d'isoler une ou plusieurs portions du bus de puissance 120. Ces troisièmes contacteurs 140A, 140B et 140C et ces quatrièmes contacteurs 142A, 142B et 142C permettent en particulier, à l'état ouvert, d'isoler les portions 120A, 120B, 120C du bus de puissance 120 les unes des autres.

Chaque troisième contacteur 140A, 140B, 140C et chaque quatrième contacteur 142A, 142B, 142C est, selon ce mode de réalisation où le bus de puissance 120 comporte deux conducteurs 122 et 124, un contacteur bipolaire, c'est-à-dire un contacteur adapté à couper simultanément ces deux conducteurs 122 et 124 de bus de puissance 120. Les premiers contacteurs 110A, 110B et 110C ainsi que les deuxièmes contacteurs 112A, 112B et 112C sont également, toujours selon ce mode de réalisation, des contacteurs bipolaires.

En variante, tout ou partie des contacteurs, parmi les premiers contacteurs 110, les deuxièmes contacteurs 112, les troisièmes contacteurs 140 et les quatrièmes contacteurs 142, sont des contacteurs unipolaires. Cela peut notamment être le cas lorsque l'un des deux conducteurs 122, 124 est porté au potentiel d'alimentation tandis que l'autre des deux conducteurs est mis à la masse, la coupure intervenant alors uniquement sur le conducteur porté au potentiel d'alimentation.

Selon un mode de réalisation préféré, le système 1 de recharge de batteries comporte en outre un bus de données 150. Chaque véhicule 1A, 1B, 1C comporte une portion 150A, 150B, 150C de ce bus de données 150. Chaque portion 150A, 150B, 150C du bus de données 150 est pourvue, à une extrémité, d'un troisième dispositif 160A, 160B, 160C (CPLD) de couplage et, à une autre extrémité, d'un quatrième dispositif 162A, 162B, 162C (CPLD) de couplage. Ces troisièmes dispositifs 160A, 160B et 160C de couplage et ces quatrièmes dispositifs 162A, 162B et 162C de couplage participent notamment à la continuité du bus de données 150.

Le bus de données 150 permet aux véhicules 1A, 1B et 1C de s'échanger des informations entre eux ou avec l'extérieur, par exemple avec une borne de recharge (non représentée). Une information pouvant être véhiculée par le bus de données 150 est, par exemple, une information ou donnée relative à un taux de charge d'une batterie 12A, 12B ou 12C. Toujours selon ce mode de réalisation préféré, les informations transitant par le bus de données 150 sont émises, reçues et traitées par un ou plusieurs circuits embarqués sur les véhicules 1A, 1B et 1C et respectivement représentés, en figure 1, par des blocs fonctionnels 170A, 170B, 170C (FCT).

Le bus de données 150 a été schématisé en figure 1 par un seul fil étant entendu que, en pratique, le bus de données 150 peut comporter un nombre quelconque de fils. En variante, le bus de données 150 est remplacé par une architecture de communication sans fil permettant aux blocs fonctionnels 170A, 170B et 170C de communiquer entre eux.

Selon un mode de réalisation, le premier dispositif de couplage 130A, 130B, 130C du bus de puissance 120 et le troisième dispositif de couplage 160A, 160B, 160C du bus de données 150 sont, en pratique, rassemblés dans un même connecteur. De façon analogue, le deuxième dispositif de couplage 132A, 132B, 132C du bus de puissance 120 et le quatrième dispositif de couplage 162A, 162B, 162C du bus de données 150 sont, en pratique, rassemblés dans un même autre connecteur. Ces connecteurs peuvent être, par exemple, des connecteurs modulaires permettant le passage de signaux de puissance et de signaux de données.

Selon un autre mode de réalisation, le premier dispositif de couplage 130A, 130B, 130C du bus de puissance 120 et le troisième dispositif de couplage 160A, 160B, 160C du bus de données 150 sont, en pratique, des connecteurs distincts. De façon analogue, le deuxième dispositif de couplage 132A, 132B, 132C et le quatrième dispositif de couplage 162A, 162B, 162C sont, en pratique, des connecteurs distincts. Cela permet notamment d'éviter d'éventuelles perturbations électromagnétiques de signaux de données véhiculés par le bus de données 150 par des signaux de puissance véhiculés par le bus de puissance 120.

Le premier contacteur 110A, 110B, 110C permet, à l'état fermé, de mettre le convertisseur d'énergie 100A, 100B, 100C en court-circuit. Autrement dit, lorsqu'il est fermé, le premier contacteur 110A, 110B, 110C permet à un courant électrique de circuler directement depuis la batterie 12A, 12B, 12C vers la portion 120A, 120B, 120C du bus de puissance 120 ou, inversement, depuis cette portion 120A, 120B, 120C du bus de puissance 120 vers la batterie 12A, 12B, 12C, sans passer par le convertisseur d'énergie 100A, 100B, 100C. Le premier contacteur 110A, 110B, 110C permet, à l'état ouvert, de forcer un passage d'un éventuel (en fonction de l'état du contacteur 112A, 112B, 112C correspondant) courant électrique à travers le convertisseur d'énergie 100A, 100B, 100C.

Le deuxième contacteur 112A, 112B, 112C permet, selon son état ouvert ou fermé, respectivement d'isoler électriquement le convertisseur d'énergie 100A, 100B, 100C par rapport à la portion 120A, 120B, 120C du bus de puissance 120 ou de relier électriquement le convertisseur d'énergie 100A, 100B, 100C à cette portion 120A, 120B, 120C du bus de puissance 120.

Selon un mode de réalisation, le premier contacteur 110A, 110B, 110C et le deuxième contacteur 112A, 112B, 112C sont interverrouillés, par exemple grâce à un interverrouillage (interlock) mécanique. Ce premier contacteur 110A, 110B, 110C et ce deuxième contacteur 112A, 112B, 112C ne peuvent ainsi se trouver simultanément dans le même état. On fait de préférence en sorte que le premier contacteur 110A, 110B, 110C et le deuxième contacteur 112A, 112B, 112C ne puissent pas être simultanément à l'état fermé, ce premier contacteur 110A, 110B, 110C et ce deuxième contacteur 112A, 112B, 112C pouvant toutefois être simultanément à l'état ouvert.

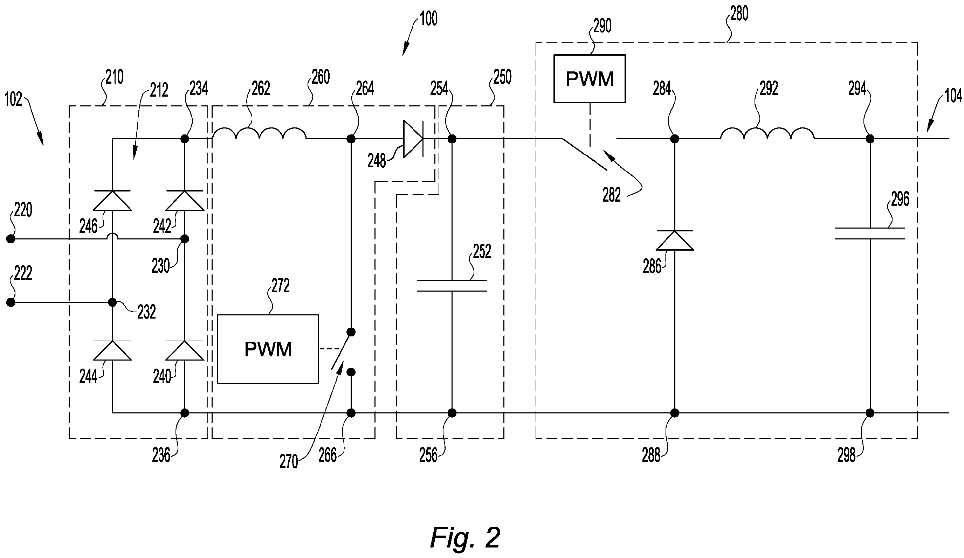

La figure 2 est un schéma électrique d'un exemple de convertisseur d'énergie 100 (100A, 100B ou 100C) du type auquel s'appliquent les modes de réalisation décrits.

Le convertisseur d'énergie 100 comporte, selon cet exemple, une première partie 210, également appelée étage d'entrée 210. Cet étage d'entrée 210 comporte un pont de redressement double alternance, par exemple un pont de diodes 212. Des bornes d'entrée 220 et 222 du convertisseur d'énergie 100 sont respectivement reliées, de préférence connectées, à des bornes d'entrée 230 et 232 de ce pont de diodes 212.

Le pont de diodes 212 permet, lorsqu'une tension d'entrée alternative, par exemple une tension alternative monophasée comportant des alternances positives et négatives, est appliquée entre les bornes 220 et 222 de l'entrée 102 du convertisseur d'énergie 100, d'effectuer un redressement double alternance de cette tension alternative monophasée. On dit alors que l'étage d'entrée 210 constitue un étage redresseur du convertisseur d'énergie 100.

Cet étage redresseur 210 permet d'obtenir, en sortie du pont de diodes 212, une tension de sortie semblable à la tension d'entrée à la différence près que les alternances négatives de la tension d'entrée sont remplacées, dans la tension de sortie, par des alternances positives, de même amplitude en valeur absolue. La tension de sortie du pont de diodes 212 ne comporte ainsi que des alternances positives. La présence de l'étage redresseur 210 dans le convertisseur d'énergie 100 permet à ce convertisseur 100 d'accepter indifféremment, en entrée 102, une tension et un courant alternatifs ou continus.

En figure 2, une première diode 240 et une deuxième diode 242 sont montées en série entre un premier nœud 234 et un deuxième nœud 236 du pont de diodes 212. De façon analogue, une troisième diode 244 et une quatrième diode 246 sont montées en série entre le premier nœud 234 et le deuxième nœud 236 du pont de diodes 212. Ce premier nœud 234 et ce deuxième nœud 236 constituent des bornes de sortie redressée du pont de diodes 212.

Dans l'exemple de la figure 2, les diodes 240, 242, 244 et 246 sont montées de telle sorte que :
la borne d'entrée 230 est reliée, de préférence connectée, à la cathode de la première diode 240 et à l'anode de la deuxième diode 242 ;
la borne d'entrée 232 est reliée, de préférence connectée, à la cathode de la troisième diode 244 et à l'anode de la quatrième diode 246 ;
le premier nœud 234 est relié, de préférence connecté, à la cathode de la deuxième diode 242 et à la cathode de la quatrième diode 246 ; et
le deuxième nœud 236 est relié, de préférence connecté, à l'anode de la première diode 240 et à l'anode de la troisième diode 244.

Le convertisseur d'énergie 100 comporte en outre, toujours selon cet exemple, un filtre 250 constitué d'une première capacité 252 (ou condensateur 252). Le filtre 250 est relié aux bornes de sortie du pont de diodes 212. Plus précisément, une première borne 254 de la première capacité 252 est reliée au premier nœud 234 du pont de diodes 212 et une deuxième borne 256 de cette première capacité 252 est reliée au deuxième nœud 236 du pont de diodes 212. Les première et deuxième bornes 254, 256 de la première capacité 252 constituent des bornes de sortie du convertisseur d'énergie 100.

Le filtre 250 permet de lisser la tension obtenue en sortie de l'étage redresseur 210. On obtient ainsi, en sortie 104 du convertisseur d'énergie 100, une tension sensiblement continue ou constante.

De façon optionnelle, le convertisseur d'énergie 100 comporte, comme illustré en figure 2, un étage 260 correcteur du facteur de puissance (Power Factor Corrector - PFC). Cet étage est usuellement intégré aux convertisseurs d'énergie tels que le convertisseur d'énergie 100 afin de répondre à des contraintes normatives, liées à un réseau de distribution d'énergie, par exemple, le secteur, auquel le convertisseur 100 est destiné à être relié ou connecté. Cet étage réalise une correction ou adaptation du facteur de puissance, souvent noté « cos ϕ », en consommant un courant proportionnel à une tension instantanée du secteur.

L'étage 260 correcteur du facteur de puissance comporte ici une inductance 262 ou bobine placée entre l'étage redresseur 210 et la première capacité 252. L'inductance 262 est mise en série avec une cinquième diode 248, appelée diode de roue libre, entre le premier nœud 234 et la première borne 254 de la première capacité 252. Un troisième nœud 264, situé entre l'inductance 262 et la cinquième diode 248, est relié, de préférence connecté, à une borne d'anode de cette cinquième diode 248. La première borne 254 de la première capacité 252 est reliée, de préférence connectée, à une borne de cathode de la cinquième diode 248.

Un quatrième nœud 266 est intercalé entre le deuxième nœud 236 et la deuxième borne 256 de la première capacité 252. En pratique, le quatrième nœud 266, le deuxième nœud 236 et la deuxième borne 256 de la première capacité 252 peuvent indifféremment former un même nœud d'interconnexion ou être reliés par des conducteurs. Un interrupteur 270, par exemple un transistor, est relié, de préférence connecté, entre le troisième nœud 264 et le quatrième nœud 266. Cet interrupteur 270, également appelé transistor hacheur 270, permet de contrôler une demande en courant d'une charge reliée ou connectée en sortie 104 du convertisseur d'énergie 100.

Le transistor hacheur 270 est usuellement piloté par un ou plusieurs circuits de modulation de largeur d'impulsion (Pulse Width Modulation - PWM), représentés par un bloc 272 (PWM) en figure 2. On parle alors de correction active du facteur de puissance. On obtient ainsi, en sortie de l'étage 260 correcteur du facteur de puissance, un courant approximativement sinusoïdal et sensiblement en phase avec la tension. Cela permet ainsi de réduire le facteur de puissance vu par le réseau de distribution d'énergie connecté en entrée du convertisseur d'énergie 100.

L'étage 260 correcteur du facteur de puissance présente des éléments et un fonctionnement semblables à ceux d'une alimentation à découpage. Le ou les circuits 272 de modulation de largeur d'impulsion fonctionnent à une fréquence très supérieure à la fréquence de la tension alternative imposée sur les bornes 220 et 222 de l'entrée 102 du convertisseur d'énergie 100. La modulation est typiquement effectuée à une fréquence comprise entre 100 kHz et 500 kHz tandis que la tension alternative en entrée 102 du convertisseur d'énergie 100 possède une fréquence d'environ 50 Hz ou d'environ 60 Hz.

De façon optionnelle, le convertisseur d'énergie 100 comporte, comme illustré en figure 2, un étage abaisseur 280. Cet étage abaisseur 280 permet de fournir, en sortie 104 du convertisseur 100, une tension inférieure à la tension appliquée en entrée 102.

L'étage abaisseur 280 comporte ici un interrupteur 282, par exemple un transistor, relié, de préférence connecté, entre la première borne 254 de la première capacité 252 et la borne de cathode 284 d'une sixième diode 286. La sixième diode 286 est associée en parallèle de la première capacité 252, la borne d'anode 288 de la sixième diode 286 étant reliée, de préférence connectée, à la deuxième borne 256 de la première capacité 252. L'interrupteur 282 est piloté par un ou plusieurs circuits de modulation de largeur d'impulsion représentés, en figure 2, par un bloc 290 (PWM).

L'étage abaisseur 280 comporte, en outre, une inductance 292 ou bobine placée entre la borne de cathode 284 de la sixième diode 286 et une première borne 294 d'une deuxième capacité 296. Une deuxième borne 298 de la deuxième capacité 296 est reliée, de préférence connectée, à la borne d'anode 288 de la sixième diode 286. La première borne 294 et la deuxième borne 298 de la deuxième capacité 296 sont reliées, de préférence connectées, à la sortie 104 du convertisseur 100.

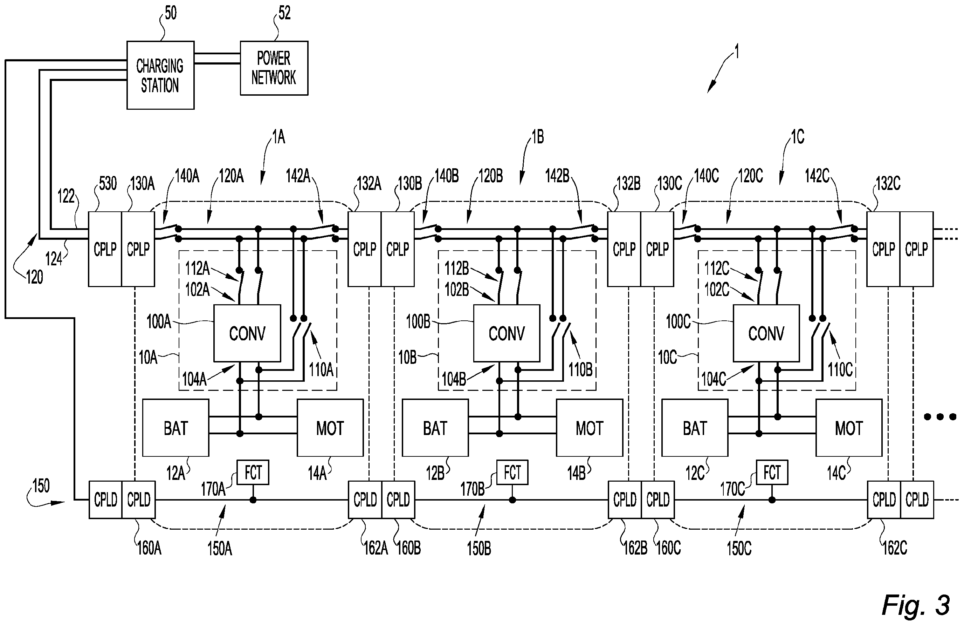

La figure 3 représente, de façon schématique, un mode de mise en œuvre du système 1 de recharge de batteries de la figure 1.

Selon ce mode de mise en œuvre, le véhicule 1A est relié à une borne 50 (CHARGING STATION) de recharge d'une station (non représentée). Cette borne de recharge 50 est raccordée à un réseau de distribution électrique 52 (POWER NETWORK), par exemple une source d'énergie fournissant une tension d'alimentation alternative, monophasée ou triphasée. La borne de recharge 50 est accouplée au véhicule 1A par l'intermédiaire d'un cinquième dispositif 530 de couplage. Le cinquième dispositif 530 de couplage de la borne 50 et le premier dispositif 130A de couplage du véhicule 1A permettent conjointement d'établir la continuité électrique du bus de puissance 120. Ce cinquième dispositif 530 de couplage est, de préférence, identique aux deuxièmes dispositifs 132A, 132B et 132C de couplage des véhicules 1A, 1B et 1C, respectivement. Le premier dispositif 130A, 130B, 130C du véhicule 1A, 1B, 1C peut ainsi avantageusement être utilisé indifféremment pour accoupler ou relier ce véhicule 1A, 1B, 1C à un autre véhicule, ou à la borne de recharge 50.

Les deuxièmes contacteurs 112A, 112B et 112C, les troisièmes contacteurs 140A, 140B et 140C ainsi que les quatrièmes contacteurs 142A, 142B et 142C sont tous, en figure 3, en position fermée. Un courant électrique est donc susceptible d'être véhiculé depuis la borne de recharge 50 jusqu'aux convertisseurs d'énergie 100A, 100B et 100C des véhicules 1A, 1B et 1C, respectivement. Les batteries 12A, 12B et 12C des véhicules 1A, 1B et 1C peuvent ainsi être rechargées à partir d'une tension alternative, fournie à la borne de recharge 50 par le réseau de distribution électrique 52.

Un avantage du système 1 de recharge de batteries réside dans le fait que ce système 1 permet, depuis une même borne de recharge, de recharger simultanément la batterie de plusieurs véhicules accouplés électriquement à la manière d'un train. La figure 3 illustre, par exemple, un cas où le train de véhicules 1A, 1B et 1C est stationné dans une station de recharge comportant la borne de recharge 50.

Un autre avantage du système 1 de recharge de batteries réside dans le fait que ce système 1 permet de sélectionner les véhicules que l'on souhaite recharger. En supposant, dans un premier cas, que l'on ne souhaite recharger que les véhicules 1A et 1B, on peut ouvrir le deuxième contacteur 142B du véhicule 1B. On isole ainsi électriquement le véhicule 1B de tous les autres véhicules situés en aval de ce véhicule 1B par rapport à la borne de recharge 50, dans ce cas, le véhicule 1C. Cela permet notamment de privilégier la recharge des batteries 12A et 12B des véhicules 1A et 1B, respectivement, par exemple dans une configuration où les véhicules les plus proches de la borne de recharge, les véhicules 1A et 1B, toujours dans ce cas, sont ceux qui sont susceptibles d'être loués en priorité par rapport aux autres véhicules, en particulier le véhicule 1C, dans ce cas. On tire ainsi profit de la présence, sur le bus de puissance 120, des troisièmes contacteurs 140 (140A, 140B, 140C) et des quatrièmes contacteurs 142 (142A, 142B, 142C) pour isoler un ou plusieurs véhicules dont on ne souhaite pas recharger la batterie, indépendamment de l'état des premiers contacteurs 110 (110A, 110B, 110C) et des deuxièmes contacteurs 112 (112A, 112B, 112C) de ce ou ces véhicules.

Selon un mode de réalisation, le premier contacteur 110A, 110B, 110C et le deuxième contacteur 112A, 112B, 112C de chaque véhicule 1A, 1B, 1C peuvent, au moins dans certains modes de fonctionnement, être simultanément à l'état ouvert. En supposant, dans un deuxième cas, que l'on ne souhaite recharger que le véhicule 1B, on peut alors :
fermer tous les troisièmes contacteurs 140A, 140B et 140C et fermer tous les quatrièmes contacteurs 142A, 142B et 142C, de sorte que tous les véhicules 1A, 1B et 1C soient raccordés entre eux et à la borne 50 par le bus de puissance 120 ;
ouvrir les premiers contacteurs 110A et 110C ainsi que les deuxièmes contacteurs 112A et 112C des véhicules 1A et 1C, de sorte que les convertisseurs d'énergie 100A et 100C ainsi que les batteries 12A et 12C de ces véhicules 1A et 1C soient découplés du bus de puissance 120 ; et
fermer le deuxième contacteur 112B du véhicule 1B, le premier contacteur 110B de ce véhicule 1B étant alors à l'état ouvert.

Selon un mode de mise en œuvre, on fait en sorte que la connexion ou le couplage du véhicule 1A à la borne de recharge 50 provoque automatiquement l'ouverture du premier contacteur 110A de ce véhicule 1A. Cette ouverture automatique peut, par exemple, être commandée par le bloc fonctionnel 170A du véhicule 1A lors de la réception, par le bus de données 150, d'une information de connexion à la borne 50. Cette information est, par exemple, transmise depuis la borne de recharge 50 via le bus de données 150. On évite ainsi un risque de réinjection de courant continu, depuis la batterie du véhicule 1A, vers la borne de recharge 50.

Selon un mode de mise en œuvre, on prévoit :
que le troisième contacteur 140A, 140B, 140C s'ouvre lorsque le premier dispositif de couplage 130A, 130B, 130C associé n'est pas raccordé ; et
que le quatrième contacteur 142A, 142B, 142C s'ouvre lorsque le deuxième dispositif de couplage 132A, 132B, 132C associé n'est pas raccordé.

On évite ainsi de mettre sous tension (ou de polariser) des éléments conducteurs, par exemple des broches, des premiers dispositifs de couplage 130A, 130B, 130C et des deuxièmes dispositifs de couplage 132A, 132B et 132C lorsque ces dispositifs de couplage ne sont pas appariés. Cela permet notamment d'améliorer la sécurité d'exploitation du système 1 de recharge de batteries.

Selon un mode de mise en œuvre, un ou plusieurs blocs fonctionnels, parmi les blocs fonctionnels 170A, 170B et 170C, sont adaptés à élaborer des stratégies de recharge des batteries 12A, 12B, 12C des différents véhicules 1A, 1B, 1C. Ces blocs fonctionnels sont alors, de préférence, adaptés à piloter les contacteurs appartenant au véhicule auquel ils sont associés. En pratique, ces blocs fonctionnels sont constitués, par exemple, de systèmes de contrôle-commande en logique câblée, de systèmes de contrôle-commande en logique programmée (par exemple, à base d'automates programmables industriels), etc.

En outre, l'un des blocs fonctionnels, parmi les blocs fonctionnels 170A, 170B et 170C, peut assurer une fonction de maître. En d'autres termes, des informations émises par ce bloc fonctionnel peuvent servir à commander la position de chaque contacteur du train de véhicules. Selon un mode de réalisation, la borne de recharge 50 comporte un bloc fonctionnel (non représenté) permettant d'assurer cette fonction de pilotage des contacteurs des véhicules 1A, 1B et 1C.

On aurait pu penser utiliser un bus de puissance 120 fonctionnant exclusivement en courant continu, mais cela aurait par exemple conduit à équiper la borne de recharge 50 d'un convertisseur capable de délivrer, à partir du courant alternatif issu du réseau 52, un courant continu d'une intensité suffisante pour recharger les véhicules 1A, 1B et 1C. Un tel convertisseur aurait en particulier entraîné des coûts d'infrastructure plus importants et une augmentation de l'espace occupé par la borne de recharge 50, ce qui pose problème dans des zones urbaines où l'espace disponible est fortement limité.

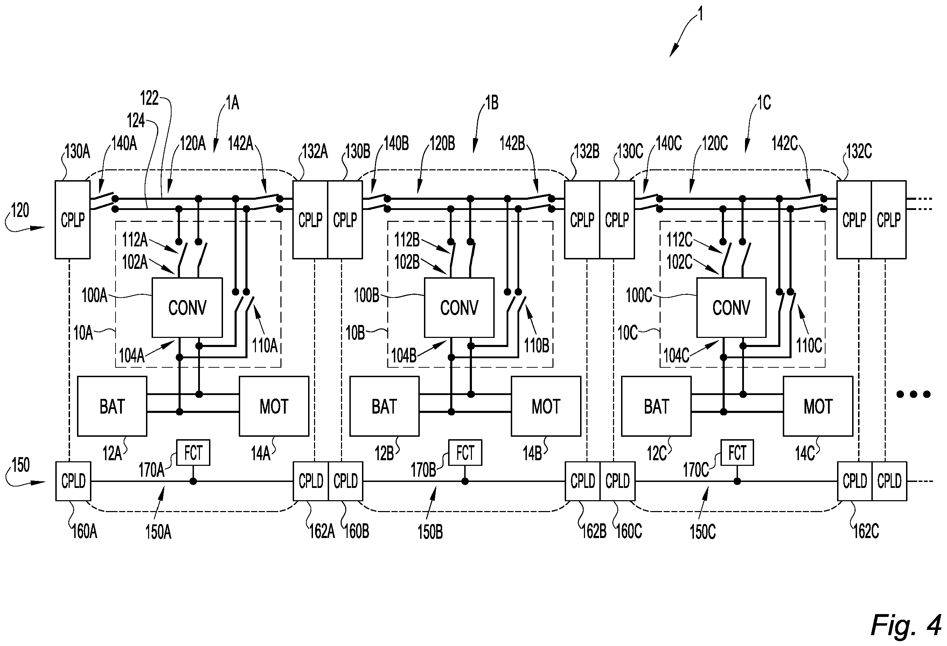

La figure 4 représente, de façon schématique, un autre mode de mise en œuvre du système 1 de recharge de batteries de la figure 1.

Selon ce mode de mise en œuvre, les véhicules 1A, 1B et 1C sont encore accouplés électriquement entre eux par le bus de puissance 120. Par rapport à ce qui a été exposé précédemment en relation avec la figure 3, le bus de puissance 120 n'est, en figure 4, relié à aucune source d'énergie externe au train formé par les véhicules 1A, 1B et 1C. En d'autres termes, on suppose que seuls des échanges d'énergie internes au train de véhicules, c'est-à-dire entre les véhicules 1A, 1B et 1C, sont susceptibles de se produire.

En figure 4, le premier dispositif 130A de couplage et le troisième dispositif 160A de couplage du véhicule 1A ne sont tous deux connectés à aucun autre dispositif de couplage. Le troisième contacteur 140A du véhicule 1A est alors, de préférence, à l'état ouvert. On considère arbitrairement que le véhicule 1A est un véhicule de tête du train formé par les véhicules 1A, 1B et 1C, ce véhicule 1A étant accouplé à un seul autre véhicule, en l'occurrence le véhicule 1B. Dans la suite de la description, on désigne par l'expression « véhicule de tête » un véhicule situé à l'avant du train de véhicules par rapport au sens de déplacement de ce train de véhicules.

On suppose que l'on veuille recharger la batterie 12B du véhicule 1B en utilisant comme source d'énergie la batterie 12C du véhicule 1C. Une façon de recharger la batterie 12B à partir de la batterie 12C consiste, comme illustré en figure 4, à :
fermer les troisièmes contacteurs 140B et 140C et fermer les quatrièmes contacteurs 142A, 142B et 142C afin que les véhicules 1A, 1B et 1C soient électriquement raccordés entre eux par l'intermédiaire du bus de puissance 120 ;
fermer le deuxième contacteur 112B du véhicule 1B afin que son convertisseur d'énergie 100B soit raccordé au bus de puissance 120, le premier contacteur 110B de ce véhicule 1B étant alors à l'état ouvert ;
ouvrir le premier contacteur 110A et ouvrir le deuxième contacteur 112A du véhicule 1A afin que le convertisseur d'énergie 100A et la batterie 12A de ce véhicule 1A soient découplés du bus de puissance 120 ; et
fermer le premier contacteur 110C du véhicule 1C afin que la batterie 12C du véhicule 1C injecte du courant sur le bus de puissance 120, le deuxième contacteur 112C de ce véhicule 1C étant alors à l'état ouvert.

On recharge ainsi, à partir du courant continu fourni par la batterie 12C du véhicule 1C, la batterie 12B du véhicule 1B par l'intermédiaire du convertisseur d'énergie 100B associé à ce véhicule 1B. Un avantage du système 1 de recharge de batteries réside dans le fait que la tension aux bornes de la batterie 12C peut être supérieure à la tension aux bornes de la batterie 12B. Dans le cas où le convertisseur d'énergie 100 est pourvu de l'étage abaisseur 280, la tension aux bornes de la batterie 12C peut indifféremment être inférieure ou supérieure à la tension aux bornes de la batterie 12B.

En supposant que l'on souhaite également recharger la batterie 12A du véhicule 1A, on peut, partant de la configuration exposée ci-dessus et illustrée en figure 4, fermer le deuxième contacteur 112A de ce véhicule 1A. Un autre avantage du système 1 de recharge de batteries réside dans le fait que plusieurs batteries peuvent être simultanément rechargées par une même batterie.

Comme cela a été exposé précédemment en relation avec la figure 3, on peut également tirer profit de la présence, sur le bus de puissance 120, des troisièmes contacteurs 140A, 140B, 140C et des quatrièmes contacteurs 142A, 142B, 142C pour isoler un ou plusieurs véhicules dont on ne souhaite pas recharger la batterie, indépendamment de l'état des premiers et deuxièmes contacteurs de ce ou ces véhicules. On peut ainsi recharger, à partir de la batterie d'un véhicule, la batterie d'un ou plusieurs autres véhicules successifs situés en amont ou en aval de ce véhicule (à gauche ou à droite, en figure 4).

Selon un mode de réalisation préféré, les premiers contacteurs 110A, 110B et 110C sont interverrouillés de sorte qu'un seul de ces premiers contacteurs 110A, 110B et 110C puisse être fermé à la fois. Cela permet d'éviter que plusieurs batteries ne soient simultanément raccordées au bus de puissance 120.

Un avantage du système 1 de recharge de batteries réside dans le fait que ce système 1 permet, par sa flexibilité, d'élaborer de nombreuses stratégies de recharge. Ces stratégies de recharge peuvent être mises en œuvre par les blocs fonctionnels 170A, 170B et 170C des véhicules 1A, 1B et 1C, ou par la borne de recharge 50 si elle est raccordée. L'un de ces blocs fonctionnels, par exemple le bloc fonctionnel 170A du véhicule de tête 1A, peut faire office de maître pour imposer aux autres blocs fonctionnels 1B et 1C la stratégie de recharge à mettre en œuvre.

On peut notamment prévoir des stratégies de recharge visant à :
équilibrer ou répartir le taux de charge entre les différentes batteries du train de véhicules, autrement dit faire en sorte, par exemple, que toutes les batteries des véhicules accouplés électriquement possèdent un taux de charge sensiblement identique ; ou
recharger prioritairement certains véhicules, par exemple le véhicule 1A de tête du train de véhicule dans une situation où ce véhicule de tête est susceptible d'être loué en priorité.

En outre, plusieurs véhicules pouvant être connectés à une même borne de recharge, disposant d'une puissance contrainte, on peut avantageusement définir des stratégies visant à allouer la puissance disponible à un ou plusieurs véhicules. On peut également prévoir de partager la puissance disponible entre plusieurs véhicules.

Dans un cas où un opérateur redistribue simultanément plusieurs véhicules entre une première station et une deuxième station, certains de ces véhicules peuvent avantageusement être rechargés en roulant. En supposant que le véhicule de tête puisse être loué juste après avoir été déposé à la deuxième station, on peut recharger la batterie de ce véhicule de tête pendant le trajet jusqu'à la deuxième station. Cela permet ainsi d'augmenter le taux de charge de la batterie du véhicule de tête par rapport à une situation où ce véhicule de tête ne pourrait pas être rechargé en roulant. Un utilisateur souhaitant louer ce véhicule de tête bénéficiera donc potentiellement d'une autonomie plus importante.

Un autre avantage du système 1 de recharge de batteries réside dans le fait que les batteries de certains véhicules 1A, 1B et 1C peuvent être partiellement ou totalement rechargées sans que ces véhicules 1A, 1B et 1C ne soient raccordés à une borne de recharge. Les véhicules 1A, 1B et 1C étant adaptés à s'échanger mutuellement de l'énergie électrique, on peut notamment prévoir de stationner ces véhicules 1A, 1B et 1C hors d'une station de recharge tout en conservant la possibilité de recharger préférentiellement le ou les véhicules susceptibles d'être loués en priorité par un ou plusieurs utilisateurs. Dans le cadre d'une infrastructure d'auto-partage, cela permet par exemple de réduire le nombre de bornes de recharge en prévoyant des stations où certains véhicules sont rechargés à partir de batteries embarquées sur d'autres véhicules. On réduit ainsi le coût global de l'infrastructure d'auto-partage tout en améliorant sa flexibilité.

Encore un autre avantage du système 1 de recharge de batteries tient au fait qu'il permet de dépanner un véhicule dont la batterie est déchargée en utilisant la batterie d'un autre véhicule. Plus généralement, de nombreux types d'échanges d'énergie sont possibles entre véhicules. On peut notamment prévoir un véhicule « réserve », autrement dit un véhicule disposant d'une réserve d'énergie importante, telle qu'une batterie de capacité supérieure à celle des batteries 12A, 12B et 12C. Un tel véhicule réserve permet de recharger d'autres véhicules ou d'autres trains de véhicules situés, par exemple, dans des zones dépourvues de borne de recharge 50 ou éloignées d'une borne de recharge 50. On peut en outre prévoir d'utiliser le véhicule réserve afin de recharger une batterie située dans une station de recharge non raccordée au réseau de distribution d'énergie.

On aurait pu penser utiliser, au lieu du convertisseur 100 exposé ci-dessus en relation avec la figure 2, un convertisseur alternatif/continu bidirectionnel, autrement dit un convertisseur capable d'injecter un courant alternatif sur le bus de puissance 120 à partir d'un courant continu délivré par la batterie associée à ce convertisseur. Cela aurait toutefois nécessité la résolution de problèmes de sécurité électrique liés à l'injection de courant alternatif sur le bus de puissance 120. Cela aurait également conduit à un rendement moindre, étant donné que l'utilisation de tels convertisseurs bidirectionnels reviendrait à mettre en œuvre deux étages de conversion d'énergie lors des échanges mutuels d'énergie entre véhicules.

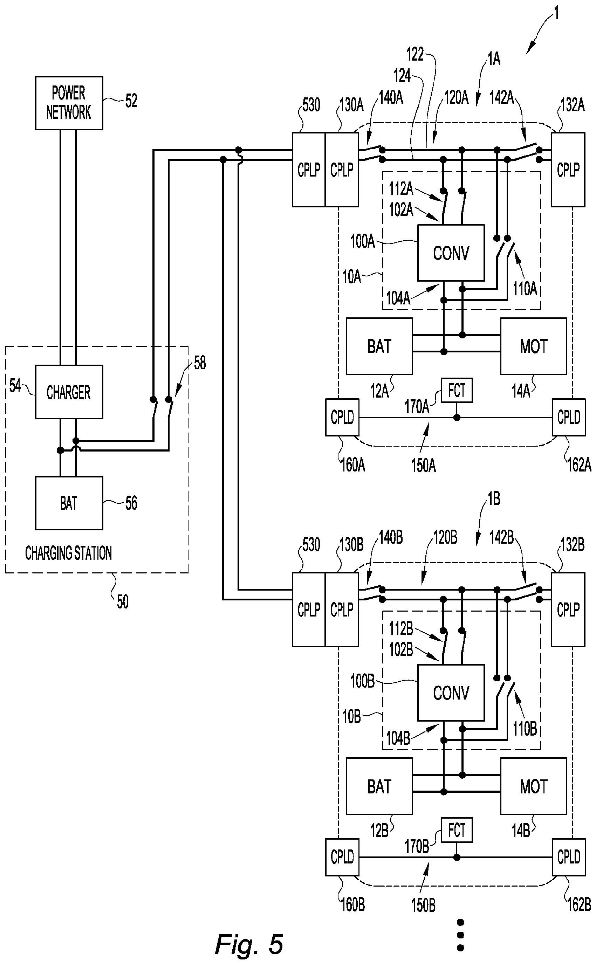

La figure 5 représente, de façon schématique, encore un autre mode de mise en œuvre du système 1 de recharge de batteries de la figure 1.

Selon ce mode de mise en œuvre, les véhicules du système 1 de recharge ne sont ici pas accouplés électriquement entre eux. En figure 5, le véhicule 1A et le véhicule 1B sont individuellement raccordés à la borne de recharge 50, mais ces véhicules 1A et 1B ne sont pas interconnectés. La borne de recharge 50 comporte un chargeur 54 de batteries destiné à recharger une batterie 56 (BAT). Cette batterie 56 est, de préférence, intégrée à la borne de recharge 50. Le chargeur 54 est alimenté par le réseau 52 de distribution électrique, de telle sorte que la batterie 56 puisse être rechargée en puisant de l'énergie électrique sur ce réseau 52.

Selon un mode de réalisation, le chargeur 54 possède une architecture semblable à celle du convertisseur 100 précédemment exposée en relation avec la figure 2. En d'autres termes, le chargeur 54 est identique, au calibre près, au convertisseur 100.

Les véhicules 1A et 1B sont reliés, de préférence connectés, à la borne de recharge 50 par des cinquièmes dispositifs de couplage 530 raccordés aux premiers dispositifs de couplage 130A et 130B des véhicules 1A et 1B. Ces dispositifs de couplage 530 permettent de véhiculer des signaux de puissance depuis la borne de recharge 50 vers les véhicules 1A et 1B du système 1 de recharge de batteries.

La borne de recharge 50 comprend préférentiellement un cinquième contacteur 58. Ce cinquième contacteur 58 est relié, de préférence connecté, à des bornes de la batterie 56, d'une part, et aux dispositifs de couplage 530, d'autre part. Le cinquième contacteur 58 permet, lorsqu'il est fermé, de relier les dispositifs de couplage 530 à la batterie 56 et, lorsqu'il est ouvert, d'isoler les dispositifs de couplage 530 par rapport à cette batterie 56.

On suppose que l'on veuille recharger la batterie 12A du véhicule 1A et la batterie 12B du véhicule 1B en utilisant comme source d'énergie la batterie 56 de la borne de recharge 50. Une façon de recharger les batteries 12A et 12B à partir de la batterie 56 consiste, comme illustré en figure 5, à :
fermer le cinquième contacteur 58 de la borne de recharge 50 ;
fermer les troisièmes contacteurs 140A et 140B des véhicules 1A et 1B, les quatrièmes contacteurs 142A et 142B étant, de préférence, à l'état ouvert dans ce mode de mise en œuvre où chaque véhicule 1A, 1B n'est accouplé à aucun autre véhicule ;
fermer les deuxièmes contacteurs 112A et 112B des véhicules 1A et 1B, les premiers contacteurs 110A et 110B de ces véhicules 1A et 1B étant à l'état ouvert.

Les batteries 12A et 12B des véhicules 1A et 1B peuvent ainsi être rechargées à partir d'une tension continue, fournie par la batterie 56 de la borne de recharge 50.

Un avantage du mode de mise en œuvre du système 1 de recharge de batteries exposé en relation avec la figure 5 réside dans le fait que la présence de la batterie 56 permet à la borne de recharge 50 de stocker de l'énergie électrique. Cette batterie 56 permet notamment à la borne de recharge 50 de délivrer, pendant une phase de recharge d'un véhicule, une puissance supérieure à la puissance pouvant être délivrée par une station 50 de recharge non équipée de la batterie 56.

La batterie 56 est, de préférence, rechargée par le réseau 52 lorsqu'aucun véhicule n'est raccordé à la borne de recharge 50 ou bien lorsque les batteries de tous les véhicules raccordés à cette borne de recharge 50 sont environ totalement rechargées. En d'autres termes, on tire profit de phases où la borne 50 ne recharge aucun véhicule pour recharger la batterie 56 de cette borne 50. Cela permet notamment de consommer, sur le réseau 52 de distribution d'énergie, une puissance instantanée plus faible que si la borne de recharge 50 n'était pas équipée de la batterie 56.

Divers modes de réalisation, modes de mise en œuvre et variantes ont été décrits. L'homme de l'art comprendra que certaines caractéristiques de ces divers modes de réalisation, modes de mise en œuvre et variantes pourraient être combinées, et d'autres variantes apparaîtront à l'homme de l'art. En particulier, l'adaptation du mode de mise en œuvre exposé en relation avec figure 5 à une situation dans laquelle plusieurs véhicules sont accouplés entre eux, l'un de ces véhicules étant raccordé à la borne de recharge 50, est à la portée de l'homme du métier à partir des indications ci-dessus.

Enfin, la mise en œuvre pratique des modes de réalisation, modes de mise en œuvre et variantes décrits est à la portée de l'homme du métier à partir des indications fonctionnelles données ci-dessus. En particulier, le dimensionnement des organes de puissance et des liaisons entre ces différents organes est à la portée de l'homme du métier à partir des indications ci-dessus.

## Revendications

1. Procédé de recharge de batteries (12A, 12B, 12C), dans lequel :
un premier convertisseur d'énergie (100A, 100B, 100C) est utilisé pour recharger une première batterie (12A, 12B, 12C) ; et
le premier convertisseur d'énergie (100A, 100B, 100C) est mis en court-circuit pour recharger, depuis la première batterie (12A, 12B, 12C), une ou plusieurs deuxièmes batteries (12A, 12B, 12C),
la première batterie (12A) étant destinée à être embarquée sur un premier véhicule (1A) et chaque deuxième batterie (12B, 12C) étant destinée à être embarquée sur un deuxième véhicule (1B, 1C).

2. Procédé selon la revendication 1, dans lequel chaque deuxième batterie (12A, 12B, 12C) est rechargée par un deuxième convertisseur d'énergie (100A, 100B, 100C) qui lui est associé.

3. Procédé selon la revendication 1 ou 2, dans lequel la première batterie (12A, 12B, 12C) est apte à être rechargée depuis une borne de recharge (50).

4. Procédé selon la revendication 3, dans lequel la première batterie (12A, 12B, 12C) est apte à être rechargée à partir d'une tension alternative, fournie à la borne de recharge (50) par un réseau de distribution électrique (52).

5. Procédé selon la revendication 3 ou 4, dans lequel la première batterie (12A, 12B, 12C) est apte à être rechargée à partir d'une tension continue, fournie par une troisième batterie (56) intégrée à la borne de recharge (50).

6. Procédé selon l'une quelconque des revendications 1 à 5, dans lequel la première batterie (12A, 12B, 12C) est apte à être rechargée à partir d'une tension continue, fournie par l'une des deuxièmes batteries (12A, 12B, 12C).

7. Système (1) de recharge de batteries mettant en œuvre le procédé selon l'une quelconque des revendications 1 à 6.

8. Système selon la revendication 7, dans son rattachement à la revendication 2, dans lequel :
un premier dispositif (10A, 10B, 10C), comprenant le premier convertisseur d'énergie (100A, 100B, 100C), et la première batterie (12A, 12B, 12C) sont embarqués sur un premier véhicule (1A, 1B, 1C) ; et
des deuxièmes dispositifs (10A, 10B, 10C), comprenant chacun l'un des deuxièmes convertisseurs d'énergie (100A, 100B, 100C), et l'une des deuxièmes batteries (12A, 12B, 12C) correspondantes sont embarqués sur des deuxièmes véhicules (1A, 1B, 1C).

9. Système selon la revendication 8, dans lequel le premier et les deuxièmes convertisseurs d'énergie (100A, 100B, 100C) comportent chacun un étage redresseur (210).

10. Système selon la revendication 8 ou 9, dans lequel le premier et les deuxièmes convertisseurs d'énergie (100A, 100B, 100C) comportent chacun un étage abaisseur (280).

11. Système selon l'une quelconque des revendications 8 à 10, dans lequel un bus de puissance (120) interconnecte le premier et les deuxièmes véhicules (1A, 1B, 1C).

12. Système selon la revendication 11, dans lequel :
un premier contacteur (110A, 110B, 110C) relie chaque première batterie et chaque deuxième batterie (12A, 12B, 12C) au bus de puissance (120) ; et
un deuxième contacteur (112A, 112B, 112C) relie chaque premier convertisseur et chaque deuxième convertisseur d'énergie (100A, 100B, 100C) au bus de puissance (120).

13. Système selon la revendication 12, dans lequel le premier contacteur (110A, 110B, 110C) et le deuxième contacteur (112A, 112B, 112C) d'un même véhicule (1A, 1B, 1C) sont interverrouillés.

14. Système selon la revendication 12 ou 13, dans lequel les premiers contacteurs (110A, 110B, 110C) du premier véhicule et des deuxièmes véhicules (1A, 1B, 1C) sont interverrouillés.

15. Système selon l'une quelconque des revendications 8 à 14, dans lequel un bus de données (150) interconnecte le premier et les deuxièmes véhicules (1A, 1B, 1C).

16. Dispositif (10A, 10B, 10C) de recharge d'une batterie (12A, 12B, 12C) d'un système (1) selon l'une quelconque des revendications 7 à 15.

## Patentansprüche

1. Ein Verfahren zum Wiederaufladen von Batterien (12A, 12B, 12C), wobei:
ein erster Energiewandler (100A, 100B, 100C) verwendet wird, um eine erste Batterie (12A, 12B, 12C) aufzuladen; und
der erste Energiewandler (100A, 100B, 100C) umgangen wird, um von der ersten Batterie (12A, 12B, 12C) eine oder mehrere zweite Batterien (12A, 12B, 12C) aufzuladen,
wobei die erste Batterie (12A) für den Einbau in ein erstes Fahrzeug (1A) und jede zweite Batterie (12B, 12C) für den Einbau in ein zweites Fahrzeug (1B, 1C) bestimmt ist.

2. Verfahren nach Anspruch 1, wobei jede zweite Batterie (12A, 12B, 12C) durch einen ihr zugeordneten zweiten Energiewandler (100A, 100B, 100C) aufgeladen wird.

3. Verfahren nach Anspruch 1 oder 2, wobei die erste Batterie (12A, 12B, 12C) von einer Ladestation (50) aufgeladen werden kann.

4. Verfahren nach Anspruch 3, wobei die erste Batterie (12A, 12B, 12C) mit einer Wechselspannung aufgeladen werden kann, die der Ladestation (50) von einem elektrischen Netz (52) zugeführt wird.

5. Verfahren nach Anspruch 3 oder 4, wobei die erste Batterie (12A, 12B, 12C) mit einer Gleichspannung aufgeladen werden kann, die von einer in die Ladestation (50) integrierten dritten Batterie (56) geliefert wird.

6. Verfahren nach einem der Ansprüche 1 bis 5, wobei die erste Batterie (12A, 12B, 12C) durch eine Gleichspannung aufgeladen werden kann, die von einer der zweiten Batterien (12A, 12B, 12C) geliefert wird.

7. Ein System (1) zum Wiederaufladen von Batterien, das das Verfahren nach einem der Ansprüche 1 bis 6 durchführt.

8. System nach Anspruch 7, wenn es von Anspruch 2 abhängt, wobei:
eine erste Einrichtung (10A, 10B, 10C), die den ersten Energiewandler (100A, 100B, 100C) aufweist, und die erste Batterie (12A, 12B, 12C) an einem ersten Fahrzeug (1A, 1B, 1C) angebracht sind; und
zweite Einrichtungen (10A, 10B, 10C), die jeweils einen der zweiten Energiewandler (100A, 100B, 100C) und eine der entsprechenden zweiten Batterien (12A, 12B, 12C) aufweisen, an zweiten Fahrzeugen (1A, 1B, 1C) angebracht sind.

9. System nach Anspruch 8, wobei der erste und der zweite Energiewandler (100A, 100B, 100C) jeweils eine Gleichrichterstufe (210) aufweisen.

10. System nach Anspruch 8 oder 9, wobei der erste und der zweite Leistungswandler (100A, 100B, 100C) jeweils eine Abwärtswandlerstufe (280) enthalten.

11. System nach einem der Ansprüche 8 bis 10, wobei ein Energiebus (120) das erste und das zweite Fahrzeug (1A, 1B, 1C) miteinander verbindet.

12. System nach Anspruch 11, wobei:
ein erstes Schütz (110A, 110B, 110C) jede erste Batterie und jede zweite Batterie (12A, 12B, 12C) mit dem Energiebus (120) koppelt; und
ein zweites Schütz (112A, 112B, 112C) jeden ersten Wandler und jeden zweiten Energiewandler (100A, 100B, 100C) mit dem Energiebus (120) koppelt.

13. System nach Anspruch 12, wobei das erste Schütz (110A, 110B, 110C) und das zweite Schütz (112A, 112B, 112C) innerhalb desselben Fahrzeugs (1A, 1B, 1C) miteinander verriegelt sind.

14. System nach Anspruch 12 oder 13, wobei die ersten Schütze (110A, 110B, 110C) des ersten Fahrzeugs und der zweiten Fahrzeuge (1A, 1B, 1C) miteinander verriegelt sind.

15. System nach einem der Ansprüche 8 bis 14, wobei ein Datenbus (150) das erste und das zweite Fahrzeug (1A, 1B, 1C) miteinander verbindet.

16. Eine Einrichtung (10A, 10B, 10C) zum Wiederaufladen einer Batterie (12A, 12B, 12C) des Systems (1) nach einem der Ansprüche 7 bis 15.

## Claims

1. A method for recharging batteries (12A, 12B, 12C), wherein:
a first energy converter (100A, 100B, 100C) is used to recharge a first battery (12A, 12B, 12C); and
the first energy converter (100A, 100B, 100C) is bypassed in order to recharge from the first battery (12A, 12B, 12C), one or more second batteries (12A, 12B, 12C),
the first battery (12A) being intended to be mounted on a first vehicle (1A) and each second battery (12B, 12C) being intended to be mounted on a second vehicle (1B, 1C).

2. The method according to claim 1, wherein each second battery (12A, 12B, 12C) is recharged by a second energy converter (100A, 100B, 100C) associated therewith.

3. The method according to claim 1 or 2, wherein the first battery (12A, 12B, 12C) is capable of being recharged from a charging station (50).

4. The method according to claim 3, wherein the first battery (12A, 12B, 12C) is capable of being recharged from an alternating voltage supplied to the charging station (50) by an electrical grid (52).

5. The method according to claim 3 or 4, wherein the first battery (12A, 12B, 12C) is capable of being recharged from a direct voltage, supplied by a third battery (56) integrated into the charging station (50).

6. The method according to any one of claims 1 to 5, wherein the first battery (12A, 12B, 12C) is capable of being recharged from a direct voltage supplied by one of the second batteries (12A, 12B, 12C).

7. A system (1) for recharging batteries implementing the method according to any one of claims 1 to 6.

8. The system according to claim 7, when dependent on claim 2, wherein:
a first device (10A, 10B, 10C) comprising the first energy converter (100A, 100B, 100C), and the first battery (12A, 12B, 12C) are mounted on a first vehicle (1A, 1B, 1C); and
second devices (10A, 10B, 10C) each comprising one of the second energy converters (100A, 100B, 100C), and one of the corresponding second batteries (12A, 12B, 12C) are mounted on second vehicles (1A, 1B, 1C).

9. The system according to claim 8, wherein the first and second power converters (100A, 100B, 100C) each include a rectifier stage (210).

10. The system according to claim 8 or 9, wherein the first and second power converters (100A, 100B, 100C) each include a down-converting stage (280).

11. The system according to any one of claims 8 to 10, wherein a power bus (120) interconnects the first and second vehicles (1A, 1B, 1C).

12. The system according to claim 11, wherein:
a first contactor (110A, 110B, 110C) couples each first battery and each second battery (12A, 12B, 12C) to the power bus (120); and
a second contactor (112A, 112B, 112C) couples each first converter and each second energy converter (100A, 100B, 100C) to the power bus (120).

13. The system according to claim 12, wherein the first contactor (110A, 110B, 110C) and the second contactor (112A, 112B, 112C) within the same vehicle (1A, 1B, 1C) are interlocked.

14. The system according to claim 12 or 13, wherein the first contactors (110A, 110B, 110C) of the first vehicle and of the second vehicles (1A, 1B, 1C) are interlocked.

15. The system according to any one of claims 8 to 14, wherein a data bus (150) interconnects the first and second vehicles (1A, 1B, 1C).

16. A device (10A, 10B, 10C) for recharging a battery (12A, 12B, 12C) of the system (1) according to any one of claims 7 to 15.
